# FASCICULE DE BREVET EUROPEEN

(11) **EP 1 910 196 B1**
(45) Date de publication et mention de la délivrance du brevet: **03.06.2009**
(21) Numéro de dépôt: 06794249.0
(22) Date de dépôt: 01.08.2006
(51) Int. Cl.: B65G 47/26

(54) **PROCEDE DE GROUPAGE DE CAISSES SUR UN CONVOYEUR ET DISPOSITIF POUR SA MISE EN OEUVRE**
VERFAHREN ZUR ANORDNUNG VON SCHACHTELN AUF EINER FÖRDERLEITUNG UND VORRICHTUNG ZUR AUSFÜHRUNG DIESES VERFAHRENS
METHOD FOR GROUPING BOXES ON A CONVEYOR LINE AND A DEVICE FOR CARRYING OUT SAID METHOD

(30) Priorité: 02.08.2005 FR 0508213
(43) Date de publication de la demande: 16.04.2008
(73) Titulaire: Sidel Participations, 76930 Octeville Sur Mer (FR)
(72) Inventeur: PETROVIC, Zmaj, 76930 Octeville-sur-Mer (FR)
(74) Mandataire: Cabinet Plasseraud
(86) Numéro de dépôt international: PCT/FR2006/001855
(87) Numéro de publication internationale: WO 2007/015000

(56) Documents cités:
- US-A- 3 961 700

## Description

La présente invention concerne un procédé de groupage de caisses sur un dispositif convoyeur en vue de la formation de trains de caisses.

Elle concerne également le dispositif convoyeur aménagé pour la mise en oeuvre du procédé de groupage et les moyens particuliers associés à ce dispositif convoyeur pour permettre cette mise en oeuvre dudit procédé.

La formation de trains de caisses sur des dispositifs convoyeurs, et en particulier de trains de caisses de bouteilles, se rencontre dans certaines installations comme, par exemple, les installations dotées d'un système de palettisation de ces caisses. Les caisses sont, par exemple, regroupées par trois ou quatre, voire cinq, selon leurs dimensions, en vue d'être rangées au moyen d'un dispositif manipulateur approprié sur des palettes.

Les cadences sont telles qu'il est de plus en plus difficile de maîtriser et de contrôler efficacement la formation de ces trains de caisses ; les problèmes sont nombreux. Les caisses étant simplement posées sur le convoyeur et en particulier sur un tapis sans fin, une partie des aléas provient du glissement de ces caisses sur ledit tapis.

Pour parvenir à contrôler le processus opératoire et à maîtriser le mouvement des caisses, les contraintes et les efforts appliqués à ces dernières sont de plus en plus importants, provoquant des déformations et aussi des dégâts, soit par usure rapide soit par destruction. Le contrôle du processus de formation de trains et en particulier la maîtrise de la coordination des différentes actions pour parvenir au groupage des caisses deviennent en fait de plus en plus difficiles.

Ainsi, par exemple, lorsque la butée de stoppage libère le train de caisses formé, les différentes caisses de ce train se décalent de façon presque systématique les unes par rapport aux autres ; ce décalage peut constituer un inconvénient pour certaines applications du genre palettisation car il impose un nouveau regroupement desdites caisses au poste de palettisation.

La présente invention propose des moyens qui permettent de surmonter les problèmes posés par les cadences ; elle évite aussi les maltraitances des caisses et améliore l'efficacité du processus de regroupement des caisses pour former des trains de caisses de façon précise, permettant notamment de former un train de caisses compact, c'est-à-dire avec des caisses en contact les unes avec les autres.

La présente invention propose également des moyens qui s'adaptent facilement sur un dispositif convoyeur comportant un tapis sans fin et des guides latéraux qui forment ensemble une sorte de couloir pour la circulation des caisses. Ces moyens constituent une sorte d'accessoire susceptible d'être implanté aisément partant où il est nécessaire sur le dispositif convoyeur.

Le procédé selon l'invention est défini par la revendication 1.

Une disposition avantageuse consiste de plus à décaler transversalement la dernière caisse du train formé au moyen de la butée amont, lequel décalage est réalisé simultanément avec la mise en position active de ladite butée amont pour stopper la première caisse de la file amont qui est en attente de groupage.

Une autre disposition avantageuse consiste de plus à positionneur la butée amont en aval de la première caisse de la file amont, une distance de cette dernière qui est de l'ordre du tiers de la dimension longitudinale des caisses, de façon à réaliser, après l'escamotage de la butée aval qui libère le train de caisses formé, une poussée sur ledit train et en particulier sur sa dernière caisse, par le biais de la ou des caisses de ladite file amont. Cette impulsion qui est donnée au train de caisses permet de former un train de caisses compact.

Encore une autre disposition avantageuse consiste de plus à détecter le passage des caisses en amont de la butée aval et, par des moyens appropriés, à réduire la vitesse du tapis d'amenée desdites caisses afin d'atténuer le chose de la première caisse du train en formation sur ladite butée aval.

L'invention concerne également le dispositif pour la mise en oeuvre du procédé de groupage présenté ci-dessus, ce dispositif convoyeur étant défini par la revendication 5.

Selon une autre disposition du dispositif, la butée amont peut être disposée latéralement, du côté du rail continu, et se situe en face du décrochement en forme d'entonnoir aménagé sur le rail latéral opposé, laquelle butée se présente sous la forme d'un crochet de retenue qui est animé d'un mouvement de rotation autour d'un axe perpendiculaire au plan du tapis de convoyage, lequel crochet est manoeuvré par des moyens du genre vérin, pour passer d'une position escamotée à une position de stoppage de la première caisse de la file amont en attente de groupage.

Toujours selon une autre disposition du dispositif; le crochet comporte une partie saillante, en forme de croc, qui est décalée en aval par rapport à l'entrée de l'entonnoir, d'une distance qui est de l'ordre du tiers de la dimension longitudinale des caisses disposée sur le convoyeur.

Selon une autre disposition du dispositif, un capteur peut être disposé en amont de la butée aval et en aval de la butée amont, de façon à détecter le passage des caisses et permettre, par des moyens appropriés, de réduire la vitesse du tapis d'amenée desdites caisses, dans le but d'atténuer le choc entre la première caisse du train et ladite butée aval.

Le dispositif peut également comprendre le système de butée amont aménagé de façon à constituer une sorte d'accessoire pour le dispositif convoyeur. Ce système de butée comprend un bâti susceptible d'être fixé sur l'un des rails formant le couloir de guidage des caisses, lequel bâti est constitué d'un profilé dont la section est en forme de U ; il comporte l'axe d'articulation du crochet et il supporte également le vérin de manoeuvre dudit crochet.

Selon une autre disposition du dispositif, le crochet de retenue peut être constitué d'une pièce part, rapportée sur un support qui s'interpose entre ledit crochet et le vérin, lequel support comprend un levier qui est manoeuvré par ledit vérin et une platine qui permet de fixer ledit crochet; en fait, cette platine permet d'installer le crochet dans une position qui confère audit dispositif de butée la possibilité d'être installé sur l'un ou l'autre des rails de guidage des caisses, à droite ou à gauche du tapis de convoyage.

Mais l'invention sera encore détaillée à l'aide de la description suivante et des dessins annexés, donnés à titre illustratif, et dans lesquels :
- la figure 1 montre, schématiquement, un dispositif convoyeur permettant la formation de trains de caisses;
- la figure 2 représente, schématiquement aussi, une élévation en coupe du système de butée aval qui permet de stopper la première caisse du train à former;
- la figure 3 représente, de façon plus détaillée et schématique également, le système de butée amont qui permet d'écarter la dernière caisse du train et de stopper la première caisse de la file amont en attente de groupage;
- les figures de 4 à 8 montrent, toujours de façon schématique, les différentes étapes du processus de formation d'un train de caisses;
- la figure 9 représente, en perspective, un dispositif de butée amont en forme d'accessoire, susceptible d'être installé sur le rail latéral de guidage situé à droite du couloir du convoyeur;
- la figure 10 représente, de façon schématique, en plan, le dispositif de butée amont de la figure 9;
- la figure 11 représente un dispositif de butée amont aménagé pour être associé à un rail latéral de guidage situé du côté gauche du convoyeur;
- la figure 12 représente, en perspective, le détail du support sur lequel s'installe le crochet pour un positionnement à droite ou à gauche sur les rails latéraux qui délimitent le couloir de guidage des caisses.

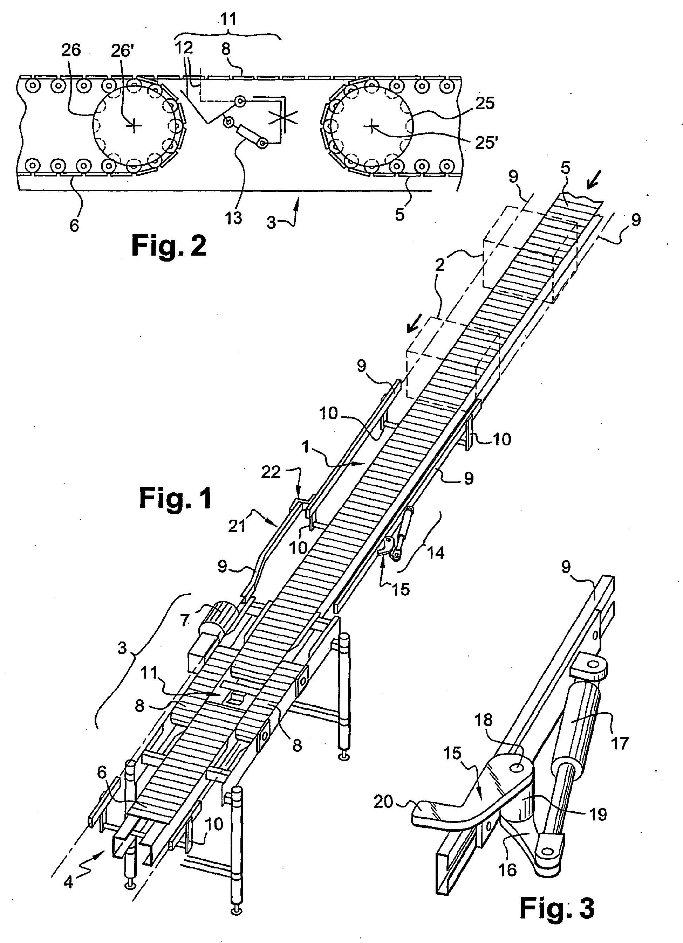

Le dispositif convoyeur représenté figure 1 comprend un convoyeur (1) pour l'amenée des caisses (2) ; ce convoyeur (1) est disposé en amont d'un module (3) intermédiaire qui réalise une sorte de jonction entre ledit convoyeur (1) et un convoyeur (4) disposé en aval dudit module (3) intermédiaire.

Le tapis (5) du convoyeur (1) et le tapis (6) du convoyeur (4) s'étendent jusque sur le module (3). Le tapis (5) est entraîné au moyen d'un motoréducteur (7) installé sur le module (3).

Pour passer du tapis (5) au tapis (6), les caisses (2) sont prises en charge, c'est-à-dire qu'elles sont portées et entraînées, au moyen de deux tapis (8) disposés de chaque côté des extrémités desdits tapis (5) et (6). Ces deux tapis (8) sont en forme de chenillettes et ils réalisent la jonction entre l'extrémité aval du tapis (5) et l'extrémité amont du tapis (6). Ces tapis (8) sont entraînés directement par le tapis (6) aval ; ils sont montés libres sur l'arbre du tapis (5) amont, comme expliqué plus loin.

Les caisses (2) sont portées et entraînées par les différents tapis (5, 6 et 8) et elles sont guidées latéralement par des rails (9) qui forment, avec lesdits tapis, une sorte de couloir. Ces rails (9) sont portés, de place en place, par des structures (10) fixées sur les convoyeurs.

Le module (3) intermédiaire comporte, dans sa partie centrale, un premier système (11) de butée, dite butée aval, qui permet de stopper la première caisse (2) lors de la formation d'un train de caisses. Ce système de butée aval, détaillé figure 2, comprend une butée (12) proprement dite, qui est mobile sous l'effet d'un vérin (13). Cette butée (12) est disposée entre les extrémités des tapis (5) et (6) des convoyeurs (1) et (4) respectivement, et entre les deux tapis (8) disposés latéralement.

Lorsque le nombre de caisses (2) stoppées par la butée (12) aval est suffisant pour former le train de caisses prévu, un second système (14) de butée, dite butée amont, est mis en oeuvre pour retenir la file amont à partir de la première caisse de cette file.

Ce second système de butée, comme détaillé figure 3, comprend une butée (15) proprement dite ; cette butée se présente sous la forme d'un crochet qui est manoeuvré par un bras (16) actionné au moyen d'un vérin (17). Ce système de butée amont est installé latéralement sur l'un des rails (9) et en particulier sur le rail situé du côté gauche du couloir de guidage des caisses (2). Comme détaillé plus loin, il peut également, selon les circonstances, être installé du côté droit.

La butée (15), en forme de crochet, est articulée au moyen d'un axe (18) dans un moyeu (19) qui est solidaire du rail (9) latéral ; cet axe (18) et le moyeu (19) sont perpendiculaires au plan du tapis (5) de convoyage. La caisse (2) qui se situe après la dernière caisse du train formé est retenue mécaniquement par le croc (20) du crochet ; son maintien ne dépend pas directement de la pression qui règne dans le vérin de manoeuvre (17).

Pour retenir cette première caisse de la file amont en attente de groupage, le croc (20) de la butée (15) pénètre dans le couloir de circulation des caisses (2) et pour pouvoir se mettre en place, il poussé et écarte la dernière caisse du train formé. Pour obtenir ce déport transversal de la dernière caisse du train formé, le rail (9) situé en face de la butée (15) comporte une discontinuité qui permet de réaliser un élargissement localisé du couloir de guidage des caisses. Cet élargissement forme une sorte d'entonnoir (21) qui se situe au niveau des dernières caisses du train formé.

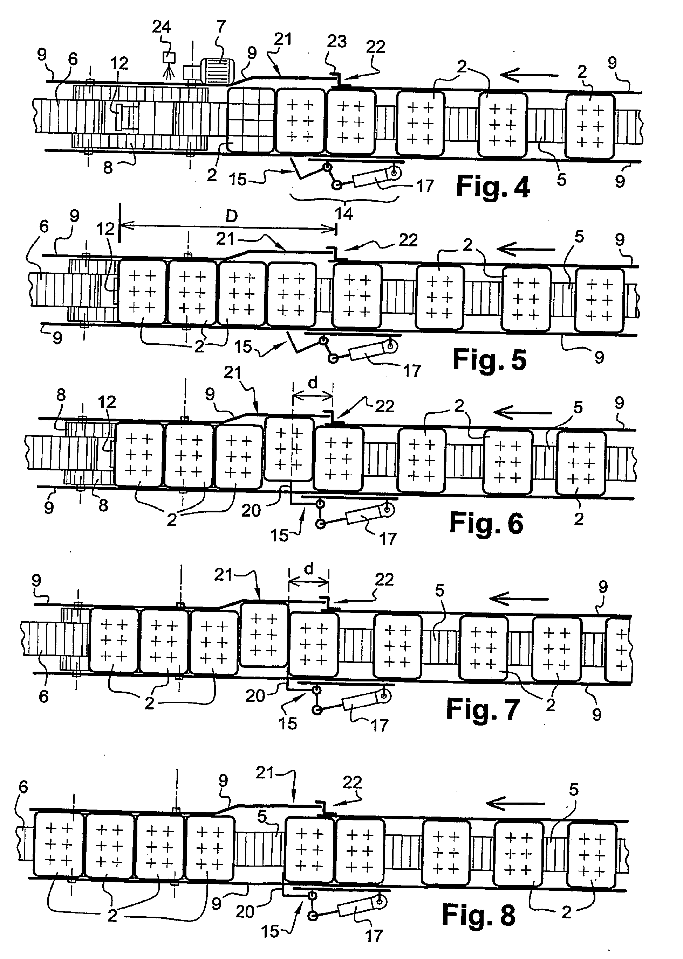

Le décrochement (22) sur le rail (9) est établi au moyen d'une patte (23) en forme de baïonnette et d'un pliage dudit rail dans sa partie aval. Ce décrochement (22) se situe à une distance D de la butée aval (12), visible figure 5, qui est sensiblement supérieure à la longueur du train de caisses. La dimension longitudinale de l'entonnoir (21) est supérieure à la dimension longitudinale des caisses (2) disposées sur le convoyeur, de l'ordre de une fois et demie cette dimension.

L'élargissement du couloir de guidage des caisses correspond au moins à la dimension du croc (20) de la butée (15) en forme de crochet, lequel croc s'étend en saillie dans le couloir lorsque ladite butée est en position active de stoppage. Ce croc (20), comme détaillé plus loin, est situé en aval du décrochement (22) aménagé sur le rail (9). La distance d, qui sépare - ce croc (20) lorsqu'il est en position active de stoppage et - ce décrochement (22), est de l'ordre du tiers de la dimension longitudinale des caisses qui circulent dans le couloir. Cette distance permet, comme expliqué ci-après, de retarder le stoppage de la première caisse de la file amont en attente de groupage, ce qui a pour effet, lors de sa libération, de faire pousser le train de caisses par ladite première caisse de la file amont et par voie de conséquence, de maintenir le contact des caisses dudit train les unes avec les autres. L'impulsion qui est donnée au train de caisses par la file amont, lors de l'escamotage de la butée (12) aval, est suffisante pour garantir cette compacité dudit train de caisses.

Les figures 4 à 8 illustrent la formation d'un train de caisses (2) au moyen du dispositif convoyeur selon l'invention, détaillé auparavant. Les différentes figures correspondent à une vue en plan schématique du dispositif convoyeur, avec une représentation simplifiée des caisses (2).

Les caisses (2) sont amenées vers la butée (12) aval au moyen du tapis (5) amont et des tapis (8) intermédiaires, lesquels tapis (8) sont entraînés par le tapis (6) aval. Le rail (9) de guidage, situé sur le côté droit comporte une discontinuité et, à partir du décrochement (22), sur sa partie aval, ce rail est déporté latéralement pour former une sorte d'entonnoir (21) qui permet d'élargir le couloir de guidage des caisses (2).

En face du décrochement (22), sur l'autre rail (9) situé à gauche, on trouve le second système (14) de butée, c'est-à-dire la butée (15) amont en forme de crochet qui est manoeuvrée par le vérin (17).

Figure 4, la butée (12) aval est en position active de stoppage ; la butée (15) amont est en position inactive ; les caisses (2) progressent vers ladite butée (12).

Figure 5, les quatre caisses (2) qui forment un train de caisses sont stoppées par la butée (12) aval et les autres caisses, en amont, continuent à avancer, amenées par le tapis (5). Lorsque le train de caisses est formé, comme représenté figure 5 ou figure 6, la dernière caisse du train formé est déplacée transversalement et se positionne dans l'espace créé par l'entonnoir (21). Ce déplacement transversal de la dernière caisse du train est réalisé par la butée (15) amont lorsqu'elle est placée en position active de stoppage sous l'effet du vérin (17) ; c'est le croc (20) de cette butée (15) amont qui bouscule la dernière caisse du train et la déporte latéralement.

Dès que la butée (15) amont est en position active de stoppage, la butée (12) aval peut être escamotée, comme représenté figure 7. L'escamotage de la butée (12) aval permet d'évacuer les quatre caisses formant le train. Ces caisses sont entraînées par les deux tapis (8) puis par le tapis (6) ; elles sont également entraînées par le tapis (5).

Les différentes caisses de la file amont, qui sont disposées sur le tapis (5), sont en attente et glissent sur ledit tapis qui continue à avancer. Aussi, dès que la butée (12) aval est escamotée, les caisses de cette file amont sont libérées et elles se mettent en mouvement jusqu'au moment où elles sont stoppées à leur tour par la butée (15) amont. Ce mouvement d'avancement des caisses amont facilite le démarrage du train de caisses formé ; la ou les caisses amont poussent la dernière caisse dudit train sur une distance d qui est de l'ordre du tiers de la dimension longitudinale des caisses sur le dispositif convoyeur.

Cette impulsion qui est donnée au train de caisses pour aider ces dernières à démarrer, découle de cette distance d qui apparaît figure 6. Sur cette figure, la butée (15) amont est en position active pour stopper les caisses de la file amont en attente de groupage qui sont emmenées par le tapis (5).

Dès que le train de caisses a été emporté par le tapis (6) aval, figure 8, et qu'il a quitté la zone de la butée (12) aval, cette dernière peut reprendre une position active comme représenté figure 4 pour stopper les autres caisses en vue de former un nouveau train de caisses.

Pour éviter des chocs trop importants sur cette butée (12) aval, un capteur (24) peut être installé en amont de cette butée (12), comme représenté figure 4 ; ce capteur (24) permet, avec des moyens appropriés, d'agir sur le motoréducteur (7) pour adapter la vitesse du tapis (5) d'amenée des caisses en la réduisant à une valeur qui est suffisante pour réduire l'impact de la première caisse sur cette butée (12) aval.

L'obtention de cette adaptation de vitesse découle du fait que, comme indiqué précédemment, le tapis (5) et le tapis (6) ne sont pas solidaires au niveau de leur entraînement.

Comme représenté figure 2, le tapis (5) est monté sur une roue (25) du type à crans, laquelle roue (25) est entraînée par l'arbre (25') du motoréducteur (7). Le tapis (6) est monté sur une roue (26), du type à crans également, laquelle roue (26) est portée par un arbre (26') non motorisé, qui est guidé dans la structure du module (3).

Les tapis (8) en forme de chenillettes, qui assurent la continuité entre les tapis (5) et (6), sont montés également sur des roues, non apparentes sur les figures, lesquelles roues sont portées par les arbres (25') et (26'), de part et d'autre des roues desdits tapis.

L'entraînement des tapis (8) est réalisé par le tapis (6) aval et en particulier par l'arbre (26') sur lequel sont solidarisées les différentes roues desdits tapis (6) et (8).

Les autres roues des tapis (8) sont soit lisses, soit montées libres sur l'arbre (25') qui réalise l'entraînement du tapis (5).

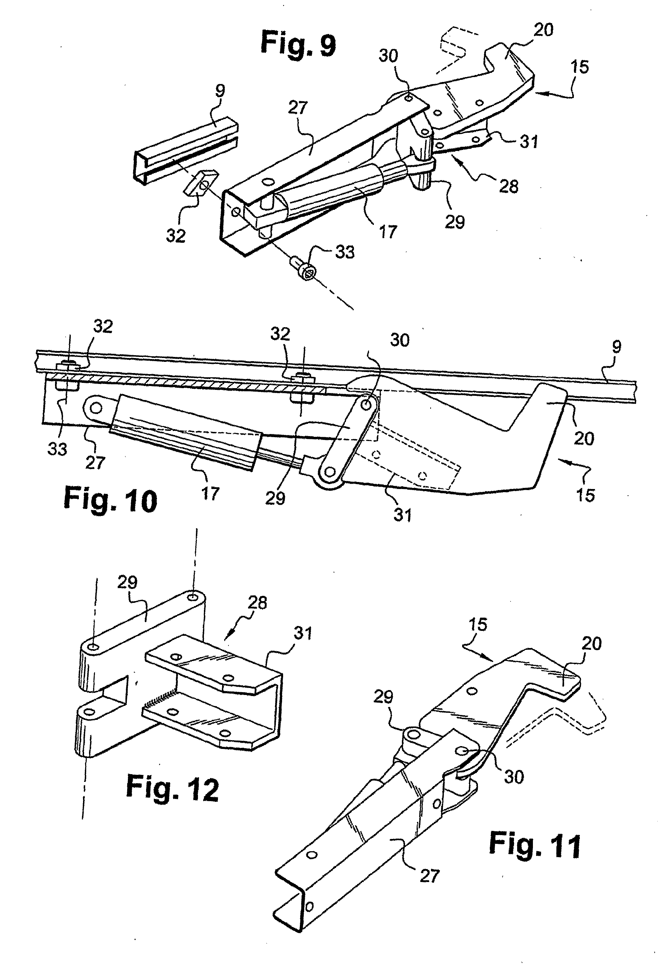

La figure 9 montre le système de butée amont, conçu pour être installé sur les rails (9) de guidage des caisses ; ce système de butée amont est conçu pour s'installer comme un simple accessoire, soit sur le rail de droite, soit sur le rail de gauche du couloir de guidage des caisses (2).

La figure 9 montre un système de butée amont qui s'installe sur un rail (9) situé du côté droit. Ce système de butée comprend une structure, ou bâti (27), qui consiste en une portion de profilé à section en U dont les dimensions sont supérieures à celles de la section du rail (9). Ce bâti (27) sert de support et de guide au vérin (17) et à la butée (15) en forme de crochet. Ce crochet se présente sous la forme d'un plat découpé et il est fixé sur un organe (28), faisant office de support, qui s'interpose entre ledit crochet et le vérin (17).

Comme représenté figure 10, le contour du crochet est façonné de telle façon que, en position inactive, il n'entrave pas la circulation des caisses ; il est légèrement en retrait par rapport au rail (9), affleurant ce dernier.

L'organe (28) qui supporte le crochet est représenté figure 12 ; il comprend un levier (29), articulé sur le bâti (27) au moyen d'un axe (30), et une platine (31) structurée pour un montage droite ou gauche de ce crochet. L'axe (30), entre le levier (29) et le bâti (27), est vertical, perpendiculaire au rail (9) ; c'est cet axe (30) qui encaisse les efforts et les chocs infligés au croc (20) du crochet par les caisses (2).

La platine (31) se présente sous la forme d'un profilé à section en U dont l'épaisseur correspond à celle des rails (9) et elle est fixée perpendiculairement au levier (29), dans sa partie médiane.

La figure 9 montre un système de butée amont qui s'installe sur le rail (9) situé sur le côté droit du couloir de guidage des caisses; la figure 11 représente un système de butée amont qui s'installe sur le rail gauche dudit couloir et qui est identique au précédent sauf que le crochet est installé sur l'autre côté de la platine (29).

Dans les deux cas, le bâti (27) est fixé au rail (9), lequel rail (9) est en forme de profilé creux ouvert latéralement côté extérieur. Le bâti (27) est fixé au rail au moyen d'écrous (32) en forme de parallélogrammes qui se logent et se bloquent dans la cavité dudit rail et au moyen de vis (33) associées.

## Revendications

1. Procédé de groupage de caisses (2) pour la formation de train de caisses (2) sur un dispositif convoyeur (1) au tapis sans fin (5) qui véhicule lesdites caisses (2) en file indienne dans un couloir délimité par des guides latéraux en forme de rails (9), lequel dispositif comporte des moyens du genre butée, **caractérisé en ce qu'**il consiste, après avoir immobilisé au moyen d'une butée aval (12) la caisse (2) située en tête de file dudit trains, - à décaler transversalement, au niveau où un rail (9) latéral est discontinu et écarté latéralement sur une longueur qui correspond au moins à la dimension longitudinale d'une caisse (2) en formant une sorte d'entonnoir (21), la dernière caisse (2) du train forme par rapport à la première caisse (2) en attente de groupage de la file amont, et, à introduire dans l'espace ainsi libéré par ladite dernière caisse (2) décalée latéralement, une butée, dite butée amont (15), chargés de retenir ladite file amont à partir de ladite première caisse (2) en attente de groupage.

2. Procédé de groupage de caisses selon la revendication 1, **caractérisé en ce qu'**il consiste à décaler transversalement la dernière caisse (2) du train formé au moyen de la butée amont (15) lors de sa mise en position active de stoppage des caisses (2) de la file amont en attente de groupage.

3. Procédé du groupage de caisses selon la revendication 2, **caractérisé en ce qu'**il consiste à positionner la butée amont (15) en aval de la première caisse (2) en attente de groupage, à une distance de cette dernières de l'ordre du tiers de la dimension longitudinale des caisses (2).

4. Procédé de groupage de caisses selon l'une quelconque des revendications 1 à 3, **caractérisé en ce qu'**il consiste à détecter le passage des caisses (2) en amont de la butée aval (12) et à réduire la vitesse du tapis (5) d'amenée desdites caisses (2) pour atténuer le choc de la première caisse (2) du train en formation sur ladite butée aval (12).

5. Dispositif convoyeur pour la mise en oeuvre du procédé de groupage de caisses (2) selon l'une quelconque des revendications 1 à 4, lequel dispositif convoyeur (1) comporte des moyens du genre butée pour former un train de caisses (2) et en particulier une butée aval (12), **caractérisé en ce qu'**il comprend, d'une part, un rail (9) latéral discontinu, lequel rail (9) est écarté latéralement sur une longueur qui correspond au moins à la dimension longitudinale d'une caisse (2), formant une sorte d'entonnoir (21) au niveau de remplacement de la dernière caisse (2) dudit train et. d'autre part, des moyens (14) pour décaler transversalement ladite dernière caisse (2) en la poussant dans ledit entonnoir (21), libérant un espace suffisant pour une butée amont (15) chargée de stopper les caisses (2) de la file amont an attente de groupage.

6. Dispositif convoyeur selon la revendication 5, **caractérisé en ce qu'**il comporte un système (14) de butée amont disposé latéralement du côté d'un rail (9) continu, en face du décrochement en forme d'entonnoir (21) du rail (9) latéral opposé, lequel système (14) de butée comprend une butée (15) proprement dite en forme de crochet, mobile autour d'un axe (18) perpendiculaire au plan du tapis (5) de convoyage des caisses (2), laquelle butée (15) est manoeuvrée par des moyens du genre vérin (17) pour la faire passer de la position escamotée à une position de stoppage des caisses (2) de la file amont en attente de groupage.

7. Dispositif convoyeur selon la revendication 6, **caractérisé en ce que** le système (14) de butée amont comporte un crochet dont la partie saillante, en terme de croc (20), est disposée en aval de l'entrée de l'entonnoir (21), à une distance d qui est de l'ordre du tiers de la dimension longitudinale des caisses (2) disposées sur le convoyeur (1).

8. Dispositif convoyeur selon l'une quelconque des revendications 6 ou 7, **caractérisé en ce que** le système (14) de butée amont est aménagé à la façon d'un accessoire, lequel système (14) de butée comprend un bâti (27) constitué d'un profilé dont la section est en forme de U susceptible d'être fixé sur l'un des rails (9) formant le couloir de guidage des caisses (2), lequel bâti (27) comporte l'axe (30) d'articulation du crochet et il supporte également le vérin (17) de manoeuvre dudit crochet.

9. Dispositif convoyeur selon la revendication 8, **caractérisé en ce que** le système (14) de butée amont comprend un crochet de retenue en forme de pièce à part rapportée sur un support (28) qui s'interpose entre ledit crochet et le vérin (17), lequel support (28) comprend un levier (29) qui est manoeuvré par ledit vérin (17) et une platine (31) en forme de U disposé dans la partie médiane dudit levier (21), lequel U a une épaisseur qui correspond à celle du rail (9), ce qui permet de fixer ledit crochet dans une position qui confère audit système (14) de butée la possibilité d'être installé sur l'un ou l'autre des rails (9) de guidage des caisses (2), à droite ou à gauche du tapis (5) de convoyage.

10. Dispositif convoyeur selon l'une quelconque des revendications 5 à 9, **caractérisé en ce qu'**il comporte un capteur (24) dispose en amont de la butée aval (12) pour détecter le passage des caisses (2) et permettre, par des moyens appropriés, de réduire la vitesse du tapis (5) d'amenée desdites caisses (2) lorsque ces dernières approchent de ladite butée aval (12).

## Claims

1. A method for grouping boxes (2) for the formation of box (2) trains on a conveyor device (1) with an endless conveyor belt (5) which conveys said boxes (2) in Indian file in a corridor delimited by lateral guides in the form of rails (9), which device comprises means of the stop type, **characterized in that** it comprises, after the box (2) located at the head of the file of said train has been immobilized by use of a downstream stop (12), offsetting transversely, in the region where a lateral rail (9) is discontinuous and set apart laterally over a length which corresponds at least to the longitudinal dimension of a box (2) thus forming a type of funnel (21), the last box (2) of the train formed with respect to the first box (2) of the upstream file on grouping standby, and introducing into the space thus released by said last box (2) which is laterally spaced-apart a stop, called an upstream stop (15), responsible for retaining said upstream file, starting from said first box (2) on grouping standby.

2. The method for grouping boxes as claimed in claim 1, **characterized in that** it comprises offsetting transversely the last box (2) of the train formed by means of the upstream stop (15) during its active positioning for stopping the boxes (2) of the upstream file on grouping standby.

3. The method for grouping boxes as claimed in claim 2, **characterized in that** it comprises positioning the upstream stop (15) downstream of the first box (2) on grouping standby at a distance from the latter of the order of one third of the longitudinal dimension of the boxes (2).

4. The method for grouping boxes as claimed in any one of claims 1 to 3, **characterized in that** it comprises detecting the passages of the boxes (2) upstream of the downstream stop (12) and reducing the speed of the conveyor belt (5) feeding said boxes (2) in order to mitigate the shock of the first box (2) of the train being formed on said downstream stop (12).

5. A conveyor device for carrying out the method for grouping boxes (2) as claimed in any one of claims 1 to 4, which conveyor device (1) comprises means of the stop type for forming a box (2) train, in particular a downstream stop (12), **characterized in that** it comprises, on the one hand, a discontinuous lateral rail (9), which rail (9) is set apart laterally over a length which corresponds at least to the longitudinal dimension of a box (2), thus forming a type of funnel (21) in the region of the location of the last box (2) of said train, and, on the other hand, means (14) for offsetting said last box (2) transversely by pushing it into said funnel (21), thus releasing a space sufficient for accommodating an upstream stop (15) responsible for stopping the boxes (2) of the upstream file on grouping standby.

6. The conveyor device as claimed in claim 5, **characterized in that** it comprises an upstream stop system (14) arranged laterally on the side of a continuous rail (9), opposite the offset in the form of a funnel (21) of the opposite lateral rail (9), which stop system (14) comprises an actual stop (15) in the form of a hook, movable about an axis (18) perpendicular to the plane of the conveyor belt (5) of the boxes (2), which stop (15) is operated by means of the jack type (17) in order to cause it to pass from the retracted position into a position for stopping the boxes (2) of the upstream file on grouping standby.

7. The conveyor device as claimed in claim 6, **characterized in that** the upstream stop system (14) comprises a hook, of which the projecting part in the form of a fang (20) is arranged downstream of the entry of the funnel (21), at a distance d which is of the order of one third of the longitudinal dimension of the boxes (2) arranged on the conveyor line (1).

8. The conveyor device as claimed in either one of claims 6 and 7, **characterized in that** the upstream stop system (14) is designed in the manner of an accessory, which stop system (14) comprises a frame (27) consisting of a profile, the cross section of which is U-shaped, capable of being fastened to one of the rails (9) forming the guide corridor of the boxes (2), which frame (27) comprises the hinge pin (30) of the hook and likewise supports the jack (17) for operating said hook.

9. The conveyor device as claimed in claim 8, **characterized in that** the upstream stop system (14) comprises a retaining hook in the form of a separate part, attached to a support (28) which is interposed between said hook and the jack (17), which support (28) comprises a lever (29) which is operated by said jack (17) and a U-shaped bracket (31) arranged in the middle part of said lever (21), which U has a thickness corresponding to that of the rail (9), thus making it possible to fasten said hook in a position which affords said stop system (14) the possibility of being installed on either one of the rails (9) guiding the boxes (2), on the right or on the left of the conveyor belt (5).

10. The conveyor device as claimed in any one of claims 5 to 9, **characterized in that** it comprises a sensor (24) arranged upstream of the downstream stop (12) in order to detect the passage of the boxes (2) and to make it possible by suitable means to reduce the speed of the conveyor belt (5) feeding said boxes (2) when the latter approach said downstream stop (12).

## Patentansprüche

1. Verfahren zur Anordnung von Kisten (2) zur Bildung eines Zugs von Kisten (2) auf einer Fördervorrichtung (1) mit endlosem Band (5), die die Kisten (2) hintereinander in einem durch seitliche Führungen in Form von Schienen (9) begrenzten Korridor befördert, wobei die Vorrichtung Mittel vom Typ Anschlag umfasst, **dadurch gekennzeichnet, dass** es darin besteht, die letzte Kiste (2) des gebildeten Zugs, nachdem die am Anfang der Reihe des Zugs liegende Kiste (2) mit Hilfe eines vorderen Anschlags (12) zum Stehen gebracht wurde, im Verhältnis zur ersten anzuordnenden Kiste (2) der hinteren Reihe auf der Höhe, wo eine seitliche Schiene (9) auf einer Länge, die mindestens der Längsausdehnung einer Kiste (2) entspricht, unterbrochen und seitlich verschoben ist und eine Art Trichter (21) bildet, quer zu verschieben und in den so von der letzten, seitlich verschobenen Kiste (2) freigegebenen Raum einen Anschlag, sogenannten hinteren (15) Anschlag, einzuführen, der die Aufgabe hat, die hintere Reihe ab der ersten anzuordnenden Kiste (2) zurückzuhalten.

2. Verfahren zur Anordnung von Kisten nach Anspruch 1, **dadurch gekennzeichnet, dass** es darin besteht, die letzte Kiste (2) des gebildeten Zugs mit Hilfe des hinteren Anschlags (15) quer zu verschieben, wenn dieser in die aktive Position zum Anhalten der Kisten (2) der hinteren anzuordnenden Reihe gebracht wird.

3. Verfahren zur Anordnung von Kisten nach Anspruch 2, **dadurch gekennzeichnet, dass** es darin besteht, den hinteren Anschlag (15) vor die erste anzuordnende Kiste (2) mit einem Abstand zu Letzterer in der Größenordnung von einem Drittel der Längsausdehnung der Kisten (2) zu positionieren.

4. Verfahren zur Anordnung von Kisten nach einem der Ansprüche 1 bis 3, **dadurch gekennzeichnet, dass** es darin besteht, den Durchlauf der Kisten (2) hinter dem vorderen Anschlag (12) festzustellen und die Geschwindigkeit des Bandes (5) zur Zuführung der Kisten (2) zu reduzieren, um den Aufprall der ersten Kiste (2) des sich bildenden Zuges auf den vorderen Anschlag (12) zu dämpfen.

5. Fördervorrichtung zur Anwendung des Verfahrens zur Anordnung von Kisten (2) nach einem der Ansprüche 1 bis 4, wobei die Fördervorrichtung (1) Mittel vom Typ Anschlag umfasst, um einen Zug von Kisten (2) zu bilden, und insbesondere einen vorderen Anschlag (12), **dadurch gekennzeichnet, dass** sie einerseits eine unterbrochene seitliche Schiene (9) umfasst, wobei die Schiene (9) auf einer Länge seitlich verschoben ist, die mindestens der Längsausdehnung einer Kiste (2) entspricht, und auf der Höhe des Standorts der letzten Kiste (2) des Zuges eine Art Trichter (21) bildet, und andererseits Mittel (14), um die letzte Kiste (2) quer zu verschieben, in dem sie in den Trichter (21) geschoben wird und einen Raum freigibt, der ausreicht, um einen hinteren Anschlag (15) zu aufzunehmen, der die Aufgabe hat, die Kisten (2) der hinteren anzuordnenden Reihe anzuhalten.

6. Fördervorrichtung nach Anspruch 5, **dadurch gekennzeichnet, dass** sie ein hinteres Anschlagsystem (14) umfasst, das auf der Seite einer durchgehenden Schiene (9) gegenüber der Ausbuchtung in Form eines Trichters (21) der gegenüberliegenden seitlichen Schiene (9) seitlich angeordnet ist, wobei das Anschlagsystem (14) einen Anschlag (15), genau genommen, in Form eines Hakens, umfasst, der um eine Achse (18) beweglich ist, die senkrecht zur Ebene des Bandes (5) zur Beförderung der Kisten (2) steht, wobei der Anschlag (15) durch Mittel vom Typ Zylinder (17) betätigt wird, um ihn von der eingezogenen Position in eine Position zum Anhalten der Kisten (2) der hinteren anzuordnenden Reihe zu bringen.

7. Fördervorrichtung nach Anspruch 6, **dadurch gekennzeichnet, dass** das hintere Anschlagsystem (14) einen Haken umfasst, dessen vorstehender Teil in Form eines Hakens (20) mit einem Abstand d in der Größenordnung von etwa einem Drittel der Längsausdehnung der auf dem Förderband (1) angeordneten Kisten (2) vor dem Eingang des Trichters (21) angeordnet ist.

8. Fördervorrichtung nach einem der Ansprüche 6 oder 7, **dadurch gekennzeichnet, dass** das hintere Anschlagsystem (14) in der Art eines Zubehörteils angeordnet ist, wobei das Anschlagsystem (14) einen Rahmen (27) umfasst, der von einem Profil gebildet wird, dessen Querschnitt die Form eines U hat, und der auf einer der Schienen (9), die den Korridor zur Führung der Kisten (2) bilden, befestigt werden kann, wobei der Rahmen (27) die Gelenkachse (30) des Hakens umfasst und auch den Zylinder (17) zur Betätigung des Hakens trägt.

9. Fördervorrichtung nach Anspruch 8, **dadurch gekennzeichnet, dass** das hintere Anschlagsystem (14) einen Rückhaltehaken in Form eines Extrateils umfasst, das auf einem Träger (28) angebracht ist, der sich zwischen dem Haken und dem Zylinder (17) befindet, wobei der Träger (28) einen Hebel (29), der durch den Zylinder (17) betätigt wird, und eine Platine (31) in Form eines U, die im mittleren Teil des Hebels (21) angeordnet ist, umfasst, wobei das U eine Dicke hat, die der der Schiene (9) entspricht, was es ermöglicht, den Haken in einer Position zu befestigen, die dem Anschlagsystem (14) die Möglichkeit verleiht, auf der einen oder der anderen der Schienen (9) zur Führung der Kisten (2), rechts oder links des Förderbandes (5) befestigt zu werden.

10. Fördervorrichtung nach einem der Ansprüche 5 bis 9, **dadurch gekennzeichnet, dass** sie einen Sensor (24) umfasst, der hinter dem vorderen Anschlag (12) angebracht ist, um den Durchlauf der Kisten (2) zu erkennen und durch geeignete Mittel zu ermöglichen, die Geschwindigkeit des Bandes (5) zur Zuführung der Kisten (2) zu reduzieren, wenn Letztere sich dem vorderen Anschlag (12) nähern.
